Europäisches Patentamt

European Patent Office

Office européen des brevets

(11) Veröffentlichungsnummer: **0 329 813**
**A1**

# (12) EUROPÄISCHE PATENTANMELDUNG

(21) Anmeldenummer: 88102920.1

(22) Anmeldetag: 26.02.88

(51) Int. Cl.⁴: **B05B 1/32** , **F16K 31/122** ,
**B05C 5/04**

(43) Veröffentlichungstag der Anmeldung:
30.08.89 Patentblatt 89/35

(84) Benannte Vertragsstaaten:
AT BE CH DE ES FR GB GR IT LI LU NL SE

(71) Anmelder: Claassen, Henning J.
Industriegebiet Hafen
D-2120 Lüneburg(DE)

(72) Erfinder: Claassen, Henning J.
Industriegebiet Hafen
D-2120 Lüneburg(DE)

(74) Vertreter: Dipl.-Ing. Schwabe, Dr. Dr.
Sandmair, Dr. Marx
Stuntzstrasse 16
D-8000 München 80(DE)

(54) Ventilanordnung zum intermittierenden Auftragen eines flüssigen Klebstoffes auf ein Substrat.

(57) Eine Ventilanordnung zum intermittierenden Auftragen eines flüssigen Klebstoffes, insbesondere eines thermoplastischen, hochpolymeren Werkstoffes auf ein Substrat weist einen Ventilkörper (30), eine in einer Auslaßdüse endende Bohrung (34) in dem Ventilkörper (30), eine Leitung zur Zuführung des Klebstoffes zu der Bohrung, eine in der Bohrung hin- und herbewegliche Ventilnadel (36) zum Öffnen oder Schließen der Auslaßdüse (38) und einen mit der Ventilnadel verbundenen Stufen- oder Differentialkolben (40) auf. Die untere, der Auslaßdüse zugewandte Fläche des Stufenkolbens ist kleiner und wird durch einen permanent angelegten Gasdruck beaufschlagt, der die Ventilnadel in die geöffnete Lage bringt.

Auf die obere, größere Fläche des Stufenkolbens wirkt ein steuerbarer, über eine Magnetventil (46) anlegbarer, in der Regel konstanter Gasdruck, der bei Beaufschlagung des Stufenkolbens die von dem ständig anliegenden, permanenten Gasdruck erzeugte Kraft überwindet und die Ventilnadel in die geschlossene Lage bringt.

FIG. 2

# Ventilanordnung zum intermittierenden Auftragen eines flüssigen Klebstoffes auf ein Substrat

Die Erfindung betrifft eine Ventilanordnung zum intermittierenden Auftragen eines flüssigen Klebstoffes, insbesondere eines hochpolymeren, thermoplastischen Werkstoffes, auf ein Substrat der im Oberbegriff des Anspruchs 1 angegebenen Gattung.

Solche Ventilanordnungen weisen im allgemeinen einen Ventilkörper mit einer in einer Auslaßdüse endenden Bohrung auf, der der hochpolymere Werkstoffe über eine Leitung zugeführt wird; zum Öffnen und Schließen der Auslaßdüse dient eine in der Bohrung hin- und herbewegliche Ventilnadel, die sehr exakt, nämlich zu genau definierten Zeitpunkten, betätigt werden muß, um die bei hohen Arbeitsgeschwindigkeiten erforderliche Genauigkeit des Werkstoff-Auftrages zu gewährleisten.

Zur Verstellung der Ventilnadel sind verschiedene Antriebsmittel vorgeschlagen worden; so its es aus der DE-AS 1 652 298 bekannt, die Ventilnadel mittels eines Elektromagneten anzuziehen und dadurch die Auslaßdüse zu öffnen, während die Verschiebung der Ventilnadel in die Schließlage unter der Einwirkung einer Feder erfolgt. Dadurch lassen sich jedoch die angestrebten, exakten Öffnungs- und Schließzeiten nicht realisieren.

Eine Variante dieses Grundprinzips geht aus der US-PS 4 320 858 hervor, wobei das Öffnen der Auslaßdüse durch Beaufschlagung der Ventilnadel mit Druckluft und das Schließen unter der Einwirkung einer Feder erfolgt. Eine Feder spricht jedoch aufgrund ihrer Massenträgheit nicht rasch genug an und ändert außerdem im Laufe der Zeit aufgrund von "Ermüdungserscheinungen" ihre Federcharakteristik, so daß es zu nicht tolerierbaren Schwankungen im Betätigungsrhythmus kommt.

Eine ähnliche Ausführungsform für ein Doppelventil geht aus der EU-OS 111 850 hervor.

Die DE-PS 32 00 470 zeigt eine Ventilnadel mit einem Stufenkolben, wobei die Ventilnadel durch Druckluftbeaufschlagung in die geöffnete Lage und durch eine Feder in die Schließlage gebracht wird. Auch hier läßt sich der angestrebte, zeitlich genau definierte Betätigungsrhythmus nicht realisieren.

Eine Ventilanordnung der angegeben Gattung geht schließlich aus der US-PS 3 420 208 hervor, wobei die Ventilnadel mit einem tellerförmigen Schieberkolben versehen ist, der abwechselnd auf beiden Seiten durch Druckluft beaufschlagt wird, wodurch die Ventilnadel in die geöffnete bzw. geschlossene Stellung gebracht wird. Wegen der abwechselnden Druckluftbeaufschlagung der beiden Seiten des Kolbens der Ventilnadel mit etwa gleichen Drücken lassen sich auch hier nicht die angestrebten, extrem kurzen Ventilspiele realisieren, die im Extremfall nur bis zu 10 ms dauern, da die Bewegung der Ventilnadel in eine Richtung erst dann beginnt, wenn der entsprechende Druck auf dieser Seite des Schieberkolbens weitgehend abgebaut worden ist. Dadurch kommt es jedoch zu starken Schwankungen im Betätigungs rhythmus, die sich insbesondere dann ungünstig bemerkbar machen, wenn mehrere solcher Ventilanordnungen nebeneinander angeordnet sind und durch gemeinsame Betätigung synchron öffnen und schließen müssen, wie es bspw. für die synchrone Aufbringung mehrerer, punktförmiger Beschichtungen auf ein Substrat erforderlich ist. Es kommt dann nämlich zu Schwankungen in den Betätigungsrhythmen der einzelnen Ventilanordnungen, die bei den heute üblichen, hohen Beförderungsgeschwindigkeiten des Substrates zu Verschiebungen im Auftragzeitpunkt und damit zu Beschichtungsfehlern führen.

Der Erfindung liegt deshalb die Aufgabe zugrunde, eine Ventilanordnung zum intermittierenden Auftragen eines flüssigen Klebers, insbesondere eines thermoplastischen, hochpolymeren Werkstoffes auf ein Substrat der angegebenen Gattung zu schaffen, bei der die oben erwähnten Nachteile nicht auftreten. Insbesondere soll eine Ventilanordnung vorgeschlagen werden, die einen sehr einfachen Aufbau hat und mit großer Genauigkeit so gesteuert werden kann, daß exakte Ventilspiele von weniger als 5 ms möglich werden.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen auf der Verwendung eines mit der Ventilnadel verbundenen Stufen- oder Differential-Kolbens, der auf seiner der Auslaßdüse zugewandten Seite mit einem konstanten, relativ geringen, permanent anliegenden Gasdruck beaufschlagt und dadurch zu einer Bewegung in die Öffnungsstellung der Ventilnadel vorgespannt wird. Da dieser permanente Luftdruck an der kleineren Fläche des Stufenkolbens angreift, ist die dabei erzeugte Kraft relativ gering.

Die gegenüberliegende, größere Fläche des Stufenkolbens wird über ein Magnetventil gesteuert mit einem Gasdruck beaufschlagt, der sehr viel höher als der permanente Gasdruck ist, so daß beim Anliegen dieses Gasdruckes die Ventilnadel schlagartig in die geschlossene Stellung gebracht wird.

Der von oben wirkende, wesentliche größere Druck führt zum einwandfreien Schließen dieser Ventilanordnung, wie es für die schlagartige Unterbrechung des Auftrags bei den heute üblichen, hohen Arbeitsgeschwindigkeiten wesentlich ist.

Liegt also der gesteuerte Gasdruck nicht an, so wirkt nur der permanente Gasdruck, d.h. die Ventilnadel wird in die geöffnete Stellung gebracht; wird nun über das Magnetventil der gesteuerte Gasdruck an die große Fläche des Stufenkolbens angelegt, so überwindet die dabei erzeugte Kraft sofort die von dem permanenten Gasdruck erzeugte Kraft, d.h. die Ventilnadel wird schlagartig in die Schließstellung gebracht und das Aufbringen des hochpolymeren Werkstoffes unterbrochen.

Dieses Ventilspiel läßt sich sehr exakt einstellen, da hierzu nur das Ein/Ausschalten des Magnetventils erforderlich ist; ein solches Magnetventil spricht sehr exakt und extrem schnell an, so daß sich auch sehr kurze Öffnungs- und Schließzeiten realisieren lassen.

Die Herstellung des Ventilkörpers ist sehr einfach, da der bspw. quaderförmige Rohling nur in eine Bohrmaschine eingespannt und dann in seiner Längsrichtung eine Bohrung mit unterschiedlichen Durchmessern ausgebildet werden muß, in der die Ventilnadel bzw. der Stufenkolben hin-bzw. hervervschiebbar sind. Bei umgekehrter Ausgestaltung des Stufenkolbens, nämlich kleine Fläche nach oben und große Fläche nach unten, ist dies nicht möglich, da dann der Rohling umgespannt oder aus zwei Teilen hergestellt werden muß, die dann zu dem fertigen Ventilkörper verschraubt werden.

Um die erforderliche Abdichtung des Stufenkolbens zu gewährleisten, sind O-Ringe vorgesehen, die in entsprechende Nuten in den beiden Stufenteilen des Stufenkolbens eingelegt sind.

Bei einer Störung, insbesondere bei Problemen mit der Gaszufuhr, ist es zweckmäßig, wenn die Ventilnadel sofort in die Schließstellung gebracht wird. Um dies zu gewährleisten, kann zwischen dem Deckel des Ventilkörpers und dem Stufenkolben eine Wendelfeder angeordnet werden, die den Stufenkolben und damit die Ventilnadel zu einer Bewegung in die Schließlage vorspannt. Selbstverständlich ist die Federkraft so gering, daß sie nicht die vom dem permanenten Gasdruck erzeugte, die Ventilanordnung öffnende Kraft übersteigt. Diese Feder unterstützt also bei normalem Betrieb den gesteuerten Gasdruck beim Schließen der Ventilanordnung und bringt beim Ausfallen der Gasdrücke die Ventilnadel sofort in die Schließstellung.

Da die Ventilnadel durch Beaufschlagung mit dem konstanten, permanent anliegenden Gasdruck geöffnet und nur durch Anlegen des gesteuerten Gasdruckes geschlossen wird, wirken sich etwaige Änderungen der Federkonstanten der Wendelfeder nicht auf den Betrieb dieser Ventilanordnung aus.

Die Erfindung wird im folgenden anhand von Ausführungsbeispielen unter Bezugnahme auf die beiliegenden, schematischen Zeichnungen näher erläutert. Es zeigen

Fig. 1 eine perspektivische Ansicht einer Anlage zum Aufsprühen eines Klebstoffes, und

Fig. 2 einen senkrechten Schnitt durch die Ventilanordnung.

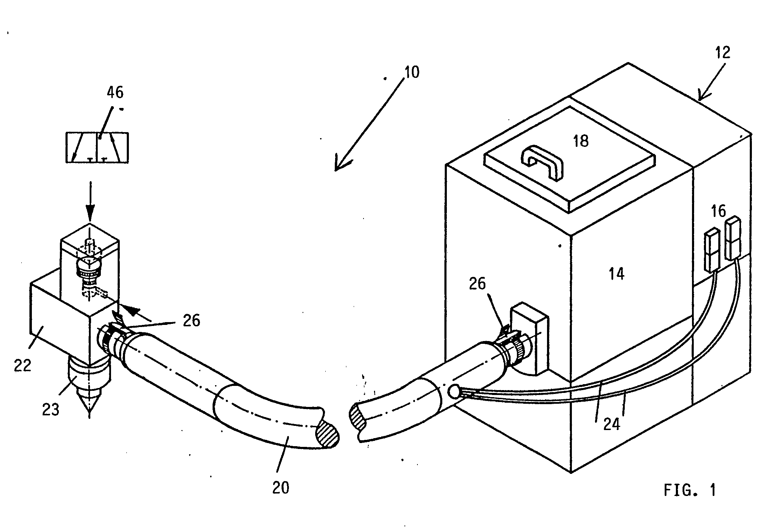

Die aus Figur 1 ersichtliche, allgemein durch das Bezugzeichen 10 angedeutete Anlage zum Versprühen eines Schmelzklebers weist ein übliches Aufschmelz-/Dosier-Gerät 12 mit einem Verflüssigungsteil 14 und einem Steuerteil 16 auf. Der Verflüssigungsteil 14 ist mit einem Deckel 18 für das Einfüllen des üblicherweise festen Ausgangsmaterials versehen.

Der Verflüssigungsteil 14 ist über einen Verbindungsschlauch 20 an einen Sprühkopf 22 mit einer Sprühdüse 23 angeschlossen. Außerdem sind in der Figur 1 noch Heiz- und Steuerleitungen 24 dargestellt, die von dem Steuerteil 16 zu dem Verbindungsschlauch 20 führen. Der verflüssigte Schmelzkleber und die Sprüh-Druckluft werden der Sprühdüse über den Schlauch 20 zugeführt.

Der Grundaufbau einer solchen Anlage zur Verarbeitung von Schmelzklebstoffen geht bspw. aus der DE-OS 34 16 105 hervor.

Die beiden Enden des Verbindungsschlauches 20 sind mit dem Sprühkopf 22 bzw. dem Verflüssigungsteil 14 verschraubt. Diese Anschlußverschraubung ist durch Isolier-Manschetten 26 umgeben.

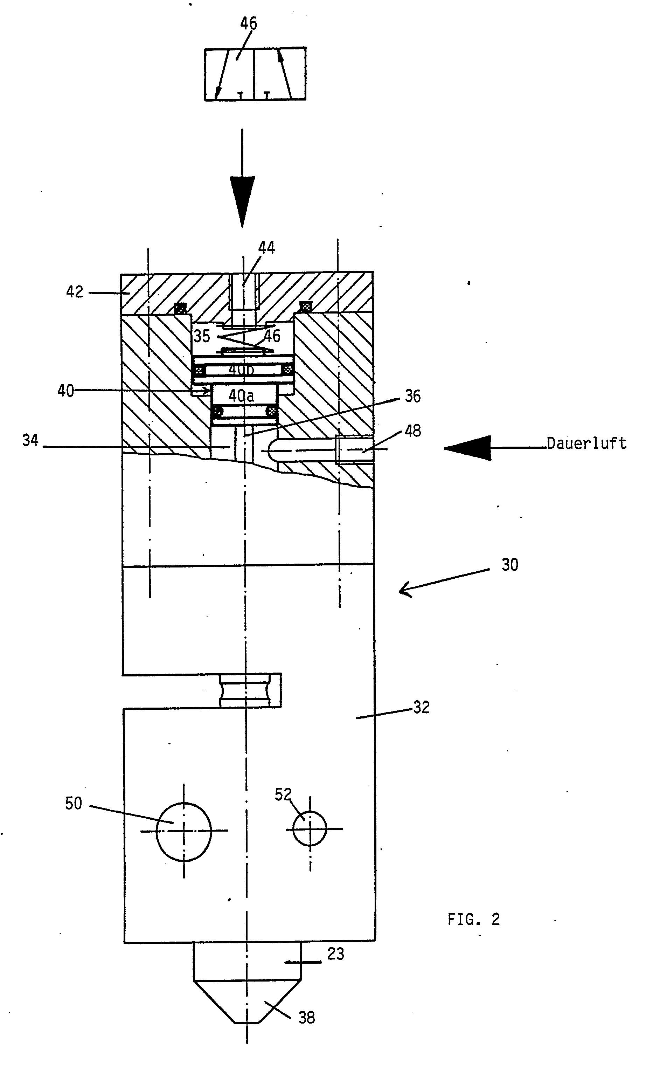

Die aus Figur 2 ersichtliche, allgemein durch das Bezugszeichen 30 angedeutete Ventilanordnung befindet sich in dem Sprühkopf 22 und weist einen langgestreckten, quaderförmigen Ventilkörper 32 mit einer in Längsrichtung des Ventilkörpers 32 verlaufenden, zylindrischen Bohrung 34 auf. In dieser Bohrung 34 kann eine Ventilnadel 36 hin- und herbewegt werden, die eine am unteren Ende des Ventilkörpers 32 vorgesehene Auslaßdüse 38 der Sprühdüse 23 öffnet bzw. schließt.

Das obere, von der Auslaßdüse 38 abgewandte Ende der Ventilnadel 36 ist mit einem Stufenkolben 40 mit zwei Teilen mit unterschiedlichem Durchmesser verbunden, nämlich einem unteren Teil 40a mit kleinem Durchmesser, der genau dem Durchmesser der Bohrung 34 entspricht, und einem oberen Teil 40b mit vergrößertem Durchmesser, der sich in einem entsprechenden Bereich 35 mit größerem Durchmesser der Bohrung 34 befindet. Die Stufe zwischen den beiden Bohrungsbereichen 34, 35 dient als unterer Anschlag für den Stufenkolben.

Jeder Teil 40a, 40b des Stufenkolbens 40 weist eine Nut mit einem O-Ring auf, die in Figur 2 mit schraffierten Linien angedeutet ist und an der Innenwand der zugehörigen Bohrung 34 bzw. 35 anliegt.

Das nach oben offene Ende des Ventilkörpers 32 ist durch einen Deckel 42 mit einer zentralen Bohrung 44 verschlossen, in die eine Luftleitung (nicht dargestellt) mündet. Die Beaufschlagung der zentralen Öffnung 44 mit der Druckluft auf der Leitung wird über ein Magnetventil 46 gesteuert.

Zwischen dem Deckel 42 und dem oberen, größeren Teil 40b des Stufenkolbens 40 ist eine Wendelfeder 46 angeordnet, die den Stufenkolben 40 und damit die Ventilnadel 36 zu einer Bewegung nach unten vorspannt, wodurch die Ventilanordnung geschlossen wird.

In Fig. 2 sind auch die Zuführungen 50, 52 für den verflüssigten Werkstoff und die Sprühluft erkennbar.

Über eine seitliche Bohrung 48 wird der Bohrung 36 unter dem Stufenkolben 40 permanent Druckluft mit konstantem, geringem Druck zugeführt; diese, auf den unteren, kleinen Teil 40a des Stufenkolbens 40 wirkende Druckluft erzeugt eine Kraft, die den Stufenkolben 40 und damit die Ventilnadel 36 nach oben verschiebt, wodurch die Auslaßdüse 38 geöffnet wird.

Die von der Wendelfeder 46 auf den Stufenkolben 40 ausgeübte Kraft ist kleiner als die von der permanent anliegenden Druckluft erzeugte Kraft, so daß die Ventilanordnung 30 ohne Beaufschlagung mit Druckluft über die zentrale Öffnung 44 geöffnet ist.

Wird nun das Magnetventil 46 geöffnet und damit die obere, größere Fläche des Stufenkolbens 40 über die zentrale Öffnung 44 mit Druckluft beaufschlagt, so entsteht eine nach unten gerichtete Kraft, die die von dem permanenten Druckluft an der Bohrung 48 erzeugte Kraft, mit Unterstützung der Feder 46 überwindet und den Stufenkolben 40 und damit die Ventilnadel 36 nach unten verschiebt, wodurch die Auslaßdüse verschlossen wird.

Betätigt man nun das Magnetventil 46 wieder, so wird schlagartig diese Kraft aufgehoben, d.h. es wirkt nun im wesentlichen die von dem permanenten Luftdruck an der Bohrung 48 erzeugte Kraft, so daß der Stufenkolben 40 nach oben verschoben und damit die Auslaßdüse 38 geöffnet wird.

Bei Funktionsstörungen, nämlich bei Unterbrechung der Luftzufuhr, wirkt nur noch die Wendelfeder 46, die den Stufenkolben 40 und damit die Ventilnadel 36 nach unten verschiebt, so daß die Auslaßdüse 38 verschlossen wird, wie es für den Notfall erforderlich ist.

## Ansprüche

1. Ventilanordnung zum intermittierenden Auftragen eines flüssigen Klebstoffes, insbesondere thermoplastischer hochpolymerer Werkstoffe, auf ein Substrat
   a) mit einem Ventilkörper

   b) mit einer in einer Auslaßdüse endenden Bohrung in dem Ventilkörper,
   c) mit einer Leitung zur Zuführung des Klebstoffes zu der Bohrung,
   d) mit einer in der Bohrung hin- und herbeweglichen Ventilnadel zum Öffnen oder Schließen der Auslaßdüse,
   e) mit einem mit der Ventilnadel verbundenen Steuerkolben,
   f) mit oberhalb und unterhalb des Steuerkolbens in die Bohrung mündenden Zuleitungen für ein Druckgas, und
   g) mit einer Steuereinrichtung zur Beaufschlagung der beiden Zuleitungen mit dem Druckgas,
   **gekennzeichnet durch** die folgenden Merkmale:
   h) der Steuerkolben ist als Differential- oder Stufenkolben (44) ausgebildet,
   i) dessen kleinere Fläche (40a) der Auslaßdüse (38) zugewandt ist;
   j) die Zuleitung (48), die zwischen dem Stufenkolben (40) und der Auslaßdüse (38) in die Bohrung (34) mündet, ist ständig mit dem Druckgas beaufschlagt und spannt die Ventilnadel (36) zu einer Bewegung in die geöffnete Lage vor; und
   k) bei Beaufschlagung der anderen Zuleitung (44) mit dem Druckgas wird die Ventilnadel (36) in die geschlossene Stellung gebracht.

2. Ventilanordnung nach Anspruch 1, dadurch gekennzeichnet, daß die Bohrung in dem Ventilkörper (32) zwei Bereiche (34, 35) mit unterschiedlichem Durchmesser für die Aufnahme der beiden Teile (40a, 40b) des Stufenkolbens (40) aufweist.

3. Ventilanordnung nach einem der Ansprüche 1 oder 2, dadurch gekennzeichnet, daß die beiden Teile (40a, 40b) des Stufenkolbens (40) mit in Nuten eingelegten O-Ringen versehen sind, die an der Wand der Bohrung (34, 35) anliegen.

4. Ventilanordnung nach einem der Ansprüche 1 bis 3, dadurch gekennzeichnet, daß die Beaufschlagung der anderen Zuleitung (44) mit dem Druckgas über ein Ventil, insbesondere ein Magnetventil (46), steuerbar ist.

5. Ventilanordnung nach einem der Ansprüche 1 bis 4, gekennzeichnet durch eine zwischen der oberen, größeren Fläche (40b) des Stufenkolbens (40) und dem oberen Ende der Bohrung (34, 35) des Ventilkörpers (32) angeordneten Feder, insbesondere Wendelfeder (46), die die Ventilnadel (36) bei einer Störung in die Schließlage bringt.

FIG. 1

FIG. 2

Europäisches
Patentamt

**EUROPÄISCHER RECHERCHENBERICHT**

Nummer der Anmeldung

EP  88 10 2920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 879 947  (SIEFEN) <br> * Spalte 5, Zeile 8 - Spalte 6, Zeile 20; Figuren 3,4 * <br> --- | 1-5 | B 05 B    1/32 <br> F 16 K   31/122 <br> B 05 C    5/04 |
| D,A | EP-A-0 111 850  (NORDSON) <br> * Seite 8, Zeile 13 - Seite 9, Zeile 22; Figur 2; Titel; Zusammenfassung * <br> ----- | 1 | |
| | | | **RECHERCHIERTE SACHGEBIETE (Int. Cl.4)** <br><br> B 05 B <br> B 05 C <br> F 16 K |

Der vorliegende Recherchenbericht wurde für alle Patentansprüche erstellt

| Recherchenort | Abschlußdatum der Recherche | Prüfer |
|---|---|---|
| DEN HAAG | 11-10-1988 | JUGUET J.M. |